# EUROPÄISCHE PATENTSCHRIFT

(11) **EP 3 819 721 B1**
(45) Veröffentlichungstag und Bekanntmachung des Hinweises auf die Patenterteilung: **18.10.2023**
(21) Anmeldenummer: 20206768.2
(22) Anmeldetag: 10.11.2020
(51) Int. Cl.: G05B 13/02, G05B 13/04

(54) **VERFAHREN ZUM REGELN EINES VERARBEITUNGSGERÄTES, REGELEINHEIT SOWIE VERARBEITUNGSGERÄT**
METHOD FOR CONTROLLING A PROCESSING DEVICE, CONTROL UNIT AND PROCESSING DEVICE
PROCÉDÉ DE COMMANDE D'UN APPAREIL DE TRAITEMENT, UNITÉ DE RÉGLAGE AINSI QUE APPAREIL DE TRAITEMENT

(30) Priorität: 11.11.2019 DE 102019130383
(43) Veröffentlichungstag der Anmeldung: 12.05.2021
(73) Patentinhaber: Rational Aktiengesellschaft, 86899 Landsberg am Lech (DE)
(72) Erfinder: Waitz, Reimar, 86899 Landsberg am Lech (DE); Agapkin, Tanja, 86899 Landsberg am Lech (DE); Bartl, Lucia, 86899 Landsberg am Lech (DE)
(74) Vertreter: Prinz & Partner mbB

(56) Entgegenhaltungen:
- EP-A2- 3 214 509
- DE-A1- 10 300 465
- DE-T2- 69 728 256
- US-A1- 2005 187 643
- US-A1- 2006 074 501
- US-A1- 2008 183 060

## Beschreibung

Die Erfindung betrifft ein Verfahren zum Regeln wenigstens eines Verarbeitungsgerätes, wobei das Verarbeitungsgerät ein Gargerät ist, sowie eine Regeleinheit für ein solches Verarbeitungsgerät sowie ein solches Verarbeitungsgerät.

Ferner betrifft die Erfindung ein Computerprogramm und einen computerlesbaren Datenträger.

Zur Verarbeitung von Produkten kommen verschiedenste Verarbeitungsgeräte und Verarbeitungsverfahren zum Einsatz, um ein Produkt wie gewünscht zu verarbeiten.

Die Verarbeitungsprozesse sind üblicherweise sehr komplex und sämtliche Verarbeitungsschritte haben einen Einfluss auf das Ergebnis des Verarbeitungsprozesses, das heißt auf das Prozessergebnis.

Beispiele solcher Verarbeitungsprozesse sind die Herstellung von Pharmazeutika, Klebstoffe, Lacke und andere Chemikalien, Auftragen eines Lackes, z.B. auf ein Karosserieteil, oder die Zubereitung von Lebensmitteln.

Die US 2008/183060 A1 offenbart eine Insulinpumpe zum Regulieren des Insulinpegels eines Patienten sowie ein Verfahren zum Betreiben dieser Insulinpumpe. In einer Variante wird anhand von früheren Mahlzeiten sowie Messdaten zum Zuckergehalt ein Steuerprofil der Insulinpumpe zum Erreichen eines zeitlichen Zielverlaufs des Insulinpegels berechnet, um eine optimierte Dosierung zu finden.

Die DE 697 28 256 T2 beschreibt einen temperaturgeregelten Prozessreaktor mit einer Reaktionskammer, die einen zu erhitzenden Gegenstand umschließt. Weiter ist ein vorhersagender Temperaturregler vorgesehen, der basierend auf Messdaten von Wärmesensoren anhand eines Modells Wärmequellen des Prozessreaktors steuert, um eine möglichst gleichmäßige Temperatur des zu erhitzenden Gegenstands zu erzielen.

US 2005/187643 A1 offenbart ein System und ein Verfahren zum Modellieren von nicht linearen Prozessen.

Aus der US 2006/074501 A1 ist ein System bekannt, das ein Modell mit einem linearen Bereich und einem nicht linearen Bereich umfasst, wobei das Modell eine Anlage oder einen Prozess repräsentiert. Basierend auf einem Inputvektor generiert das Modell einen vorhergesagten Outputvektor, mit dem die Anlage oder der Prozess steuerbar ist.

Aus der DE 103 00 465 A1 ist ein Verfahren zum Garen von Gargut in einem Garraum eines Gargeräts bekannt. Das Gargerät verfügt über eine Steuer- und/oder Regeleinrichtung, die Zugriff auf zeitlich geordnete Messdaten sowie zeitlich nicht geordnete Messdaten hat. Anhand der Messdaten wird ein Ist-Ablauf eines Garprozesses bestimmt, mittels einer Cluster-Analyse einem repräsentativen Garprofil zugeordnet und der weitere Garprozess in Abhängigkeit des bestimmten repräsentativen Garprofils geführt.

Die EP 3 214 509 A2 beschreibt eine Vorrichtung zur automatischen Anpassung eines Steuerparameters, mit dem ein Betriebssteuersignal für eine Steuervorrichtung einer Anlage berechnet wird. Die Anlage ist insbesondere eine Wärmekraftanlage, die mit einer Dampfturbine ausgestattet ist. Die Vorrichtung verfügt über einen Simulator, der das Verhalten der Anlage simuliert und über eine Lerneinheit nach einem optimalen Steuerparameter suchen kann.

Verarbeitungsgeräte für den professionellen Einsatz, die automatisiert einen Verarbeitungsprozess für ein bestimmtes Produkt durchführen, sind bekannt. Bei solchen Verarbeitungsgeräten ist es jedoch notwendig, dass der Verarbeitungsprozess permanent angepasst werden kann, um auf unvorhergesehene Situationen oder Abweichungen von üblichen Prozessen reagieren zu können. Solche Abweichungen können beispielsweise durch vorhergehende Verarbeitungsschritte, die außerhalb des Verarbeitungsgerätes durchgeführt wurden, hervorgerufen sein und können üblicherweise nicht antizipiert werden.

Übliche Verarbeitungsgeräte können jedoch Verarbeitungsprozesse nur in einem geringen Umfang anpassen und insbesondere keine vorausschauenden Änderungen vornehmen.

Es ist daher Aufgabe der Erfindung, ein Verfahren zum Regeln wenigstens eines Verarbeitungsgerätes sowie eine Regeleinheit und ein Verarbeitungsgerät bereitzustellen, die es ermöglichen, Verarbeitungsprozesse flexibel anzupassen, um das gewünschte Prozessergebnis besser zu erreichen.

Die Aufgabe wird gelöst durch ein Verfahren gemäß Anspruch 1, eine Regeleinheit nach Anspruch 10, ein Verarbeitungsgerät nach Anspruch 11, ein Computerprogramm nach Anspruch 12 sowie einen computerlesbaren Datenträger nach Anspruch 13.

Das Verfahren dient zum Regeln wenigstens eines Verarbeitungsgerätes mittels einer Regeleinheit zur Regelung des wenigstens einen Verarbeitungsgerätes, wobei das Verarbeitungsgerät ein Gargerät ist. Das Verarbeitungsgerät hat einen Prozessraum, der ein Garraum ist, zum Verarbeiten eines Produkts gemäß einem Verarbeitungsprozess und mehreren Komponenten, die eine Prozessumgebung in wenigstens einem Prozessraum beeinflussen. Das Verfahren umfasst dabei die folgenden Schritte:
a) Erhalten eines gewünschten Prozessergebnisses als Wunsch-Ergebnis durch die Regeleinheit,
b) Erhalten von wenigstens einem aktuellen Wert wenigstens eines Umgebungsparameters eines laufenden Verarbeitungsprozesses durch die Regeleinheit, wobei der wenigstens eine Umgebungsparameter (K₁ - Kₙ) die Prozessraumtemperatur, die Feuchte, der Energieeintrag in das Produkt, die Lüfterdrehzahl eines Lüfters des wenigstens eines Verarbeitungsgeräts (10), die Leistung einer Mikrowellenquelle, das Maß an Ablöschung, das Entfeuchtungsverhalten und/oder der Betriebszustand von Komponenten (20) des wenigstens eines Verarbeitungsgerätes (10) ist,
c) Erhalten von wenigstens einem aktuellen Wert wenigstens eines Produktparameters des laufenden Verarbeitungsprozesses durch die Regeleinheit, wobei der wenigstens eine Produktparameter (L₁ - Lₙ) die Kerntemperatur des Produkts, die Bräunung der Oberfläche des Produkts, ein oder mehrere lebensmittelsensorische Attribute des Produkts, der Wassergehalt des Lebensmittels, die Größe des Produkts, die Masse des Produkts, die Dicke des Produkts und/oder die Vorbehandlung des Produkts ist,
d) Vorhersagen des Ergebnisses des laufenden Verarbeitungsprozesses anhand des wenigstens einen erhaltenen aktuellen Wertes des wenigstens einen Umgebungsparameters und des wenigstens einen erhaltenen aktuellen Wertes des Produktparameters durch ein Vorhersagemodul der Regeleinheit, um ein Vorhersage-Ergebnis zu erhalten, wobei das Vorhersage-Ergebnis (Ev) das angepasste Ergebnis (E_{A}) und/oder das Wunsch-Ergebnis (E_{W}) wenigstens einen Ergebniswert wenigstens eines Produktparameters (L₁ - Lₙ) enthält,
e) Bestimmen, ob das Vorhersage-Ergebnis dem Wunsch-Ergebnis genügend entspricht durch ein Kostenmodul der Regeleinheit, gekennzeichnet durch die Schritte:
f) Ermitteln eines angepassten Verarbeitungsprozesses durch Anpassen wenigstens eines Kontrollparameters, der den wenigstens einen Umgebungsparameter beeinflusst, durch ein Anpassungsmodul der Regeleinheit, wenn das Vorhersage-Ergebnis dem Wunsch-Ergebnis nicht genügend entspricht,
g) Vorhersagen des Ergebnisses des angepassten Verarbeitungsprozesses durch das Vorhersagemodul der Regeleinheit, um ein angepasstes Ergebnis zu erhalten,
h) Bestimmen, ob das angepasste Ergebnis dem Wunsch-Ergebnis genügend entspricht durch das Kostenmodul der Regeleinheit,
i) Wiederholen der Schritte f) bis h), wenn das angepasste Ergebnis dem Wunsch-Ergebnis nicht genügend entspricht, und
j) Übergeben des angepassten Verarbeitungsprozesses an ein Komponentensteuermodul der Regeleinheit, wenn das angepasste Ergebnis dem Wunsch-Ergebnis genügend entspricht.

Durch die Vorhersage des Prozessergebnisses anhand aktueller Messwerte können frühzeitig etwaige Abweichungen erkannt und entsprechend vorausschauend reagiert werden.

Erfindungsgemäß wird außerdem die Qualität des Prozessergebnisses dadurch sichergestellt, dass der angepasste Verarbeitungsprozess nochmals und genauso wie der aktuell laufende Verarbeitungsprozess überprüft wird.

Dadurch lassen sich qualitativ hochwertige Prozessergebnisse erzielen, die sehr nahe an den vom Benutzer gewünschten Prozessergebnissen sind. Außerdem lässt sich das Verfahren auf sehr komplexe Verarbeitungsprozesse anwenden.

Ein Verarbeitungsprozess hat im Rahmen dieser Erfindung wenigstens eine Verarbeitungsphase, die in einem Verarbeitungsgerät durchgeführt wird. Der Verarbeitungsprozess bzw. die wenigstens eine Verarbeitungsphase enthält im Rahmen dieser Erfindung den zukünftigen zeitlichen Soll-Verlauf wenigstens eines Prozessparameters, beispielsweise eines Umgebungsparameters bzw. wenigstens eines Kontrollparameters, der wenigstens einen Umgebungsparameter beeinflusst. In anderen Worten kann ein Verarbeitungsprozess als Rezept zur Zubereitung angesehen werden.

Zum Beispiel hat ein Verarbeitungsprozess und/oder jede Verarbeitungsphase einen Endzeitpunkt, an dem der Verarbeitungsprozess bzw. die Verarbeitungsphase abgeschlossen ist.

In einer Ausführungsvariante weist der Verarbeitungsprozess mehrere Verarbeitungsschritte und/oder Verarbeitungsphasen auf, wobei das Produkt während des Verarbeitungsprozesses in zeitlicher Abfolge in unterschiedlichen Verarbeitungsgeräten verarbeitet wird, wobei wenigstens einer der Umgebungsparameter und/oder wenigstens einer der Kontrollparameter das zu verwendende Verarbeitungsgerät für wenigstens einen der Verarbeitungsschritte bzw. Verarbeitungsphasen bestimmt.

Der wenigstens eine Produktparameter ist die Kerntemperatur des Produkts, die Bräunung der Oberfläche des Produkts, ein oder mehrere lebensmittelsensorische Attribute des Produkts, der Wassergehalt des Produkts, die Größe des Produkts, die Masse des Produkts, die Dicke des Produkts und/oder die Vorbehandlung des Produkts, wodurch die Eigenschaften des Produkts präzise beschrieben werden.

Um die Eigenschaften der Prozessumgebung präzise zu beschreiben, ist der wenigstens eine Umgebungsparameter die Prozessraumtemperatur, die Feuchte, der Energieeintrag in das Produkt, die Lüfterdrehzahl eines Lüfters des wenigstens einen Verarbeitungsgeräts, die Leistung einer Mikrowellenquelle, das Maß an Wrasenniederschlagung, das Entfeuchtungsverhalten und/oder der Betriebszustand von Komponenten, insbesondere Energiequellen, des wenigstens einen Verarbeitungsgerätes sein.

In einer Ausgestaltung enthält das Vorhersage-Ergebnis, das angepasste Ergebnis und/oder das Wunsch-Ergebnis wenigstens einen Ergebniswert wenigstens eines Produktparameters, insbesondere der Kerntemperatur, der Bräunung, eines oder mehrerer lebensmittelsensorischer Attribute, zum Beispiel die Knusprigkeit und/oder der Biss, und/oder des Wassergehalts des Produkts, wodurch der Zustand des Produkts zum (hypothetischen) Abschluss des jeweiligen Verarbeitungsprozesses bzw. gemäß dem Wunsch des Benutzers vergleichbar beschrieben ist.

Beispielsweise umfasst das Kostenmodul eine Kostenfunktion, die einen Kostenwert in Abhängigkeit der Abweichung des angepassten Ergebnisses oder des Vorhersage-Ergebnisses vom Wunsch-Ergebnis bestimmt. Das Vorhersage-Ergebnis oder das angepasste Ergebnis entspricht dem Wunsch-Ergebnis genügend, wenn der Kostenwert auf oder unterhalb eines vorbestimmen Schwellwertes liegt, und das Vorhersage-Ergebnis oder das angepasste Ergebnis entspricht dem Wunsch-Ergebnis nicht genügend, wenn der Kostenwert oberhalb des vorbestimmen Schwellwertes liegt. Auf diese Weise lässt sich der jeweilige Verarbeitungsprozess gezielt bewerten.

Für eine besonders präzise Bewertung kann die Kostenfunktion für mehrere des wenigstens einen Produktparameters des Vorhersage-Ergebnisses, des angepassten Ergebnisses und/oder des Wunsch-Ergebnisses die Differenz zwischen dem wenigstens einen Ergebniswert des Vorhersage-Ergebnisses oder des angepassten Ergebnisses und wenigstens einem Ergebniswert des Wunsch-Ergebnisses ermitteln, und die wenigstens eine ermittelte Differenz gewichten und/oder quadriert aufsummieren, um den Kostenwert zu erhalten.

In einer Ausführungsform passt das Anpassungsmodul den wenigstens einen Umgebungsparameter und/oder den wenigstens einen Kontrollparameter in Abhängigkeit der Kostenfunktion und/oder des Kostenwerts derart an, insbesondere iterativ an, dass der Kostenwert verringert, insbesondere minimiert wird, wodurch das bestmögliche Prozessergebnis erzielt wird.

Um kaufmännische Aspekte und/oder Umweltschutzaspekte mit zu gewichten, kann die Kostenfunktion den Ressourcenverbrauch und/oder die Emission des wenigstens einen Verarbeitungsgeräts bei der Bestimmung des Kostenwerts berücksichtigen, insbesondere derart, dass ein hoher Ressourcenverbrauch und/oder eine hohe Emission zu einem erhöhten Kostenwert führen.

In einer Ausgestaltung erhält das Anpassungsmodul wenigstens eine Nebenbedingung, die bei der Anpassung des wenigstens einen Umgebungsparameters und/oder des wenigstens einen Kontrollparameters berücksichtigt wird. Dadurch kann der Anpassungsprozess kontrolliert werden.

Beispielsweise ist die wenigstens eine Nebenbedingung eine Situationsbedingung wie die Grenzen der Umgebungsparameter, die Trägheit der Prozessumgebung, die Höhe des wenigstens einen Verarbeitungsgeräts über dem Meeresspeigel und/oder der Ressourcenverbrauch des Verarbeitungsprozesses. Alternativ oder zusätzlich kann die Nebenbedingung eine Wunschbedingung, wie eine monoton steigende oder fallende Temperatur und/oder ein maximal verfügbares Kontingent einer Ressource sein, wodurch dem Anpassungsmodul detaillierte Vorgaben gemacht werden können.

Für eine effiziente und präzise Anpassung kann das Anpassungsmodul den wenigstens einen Umgebungsparameter und/oder den wenigstens einen Kontrollparameter mittels einem Gradientenverfahren, einem Simplex Verfahren, einem Nelder Mead Verfahren, einem evolutionären Algorithmus und/oder mittels COBYLA (Constrained optimization by linear approximation) anpassen.

In einer Ausführungsvariante erhält das Vorhersagemodul und/oder das Anpassungsmodul zudem zeitunabhängige Prozessparameter und/oder zukünftige Soll-Werte wenigstens eines Umgebungsparameters und/oder wenigstens eines Kontrollparameters, insbesondere gemäß dem laufenden oder angepassten Verarbeitungsprozess und zieht diese zur Vorhersage bzw. zur Anpassung heran, wodurch die Qualität der Vorhersage bzw. der Anpassung weiter verbessert wird.

Unter einem zeitunabhängigen Prozessparameter werden solche Prozessparameter verstanden, die durch äußere Gegebenheiten vorgegeben sind und sich über den Zeitraum eines Verarbeitungsprozesses nicht wesentlich ändern. Ein zeitunabhängiger Prozessparameter ist daher konstant, sodass die Zukunftswerte und die Vergangenheitswerte eines zeitunabhängigen Prozessparameters Spezifikationen entnommen oder einmal gemessen werden können.

Zeitunabhängige Prozessparameter sind zum Beispiel die Größe des Prozessraums, der Gerätetyp des wenigstens einen Verarbeitungsgerätes, die Umgebungstemperatur des wenigstens einen Verarbeitungsgerätes, der Typ bzw. die Klasse des Produkts, die Platzierung des Produkts im Prozessraum, die Höhe des wenigstens einen Verarbeitungsgerätes über dem Meeresspiegel.

In einer Ausführungsform umfasst das Vorhersagemodul zur Vorhersage wenigstens ein Maschinenlernmodell - insbesondere ein trainiertes künstliches neuronales Netzwerk, einen Entscheidungsbaum, wenigstens einen Random Forest und/oder eine Gaußprozessregression - ein empirisches Modell der Prozessumgebung mit Zeitabhängigkeit, ein semi-physikalisches Modell, wie ein mathematisches Modell basierend auf vereinfachten physikalisch-chemischen Zusammenhängen, und/oder ein physikalisches Modell, wie eine FEM-Simulation. Auf diese Weise können Vorhersagen auch für komplexe Verarbeitungsprozesse präzise getroffen werden.

Um die Präzision der Vorhersage weiter zu erhöhen, kann das Vorhersagemodul wenigstens ein Umgebungsmodul zur Vorhersage von Zukunftswerten wenigstens eines Umgebungsparameters und wenigstens ein Prozessergebnismodul zur Vorhersage des Ergebnisses des laufenden oder angepassten Verarbeitungsprozesses aufweisen, wobei das Prozessergebnismodul die Ausgabe des Umgebungsmoduls erhält.

In einer Ausführungsform weist das Verfahren ferner die folgenden Schritte auf:
- Bereitstellen von Vergangenheitswerten des wenigstens einen Umgebungsparameters und/oder von Vergangenheitswerten des wenigstens einen Produktparameters,
- Bereitstellen von Zukunftswerten des wenigstens einen Umgebungsparameters und/oder wenigstens eines Kontrollparameters, der den wenigstens einen Umgebungsparameter beeinflusst,
- Übergeben der Vergangenheitswerte und der Zukunftswerte an das Vorhersagemodul, und
- Bestimmen des Ergebnisses des laufenden Verarbeitungsprozesses durch das Vorhersagemodul wenigstens anhand der Vergangenheitswerte und der Zukunftswerte des wenigstens einen Umgebungsparameters und/oder wenigstens eines Kontrollparameters, der den wenigstens einen Umgebungsparameter beeinflusst, und des wenigstens einen Produktparameters.

Durch die Berücksichtigung von Vergangenheitswerten und Zukunftswerten ist eine hochpräzise Vorhersage möglich.

In einer Ausführungsform der Erfindung wird wenigstens eine Referenzzeitspur bereitgestellt, dem Vorhersagemodul übergeben und zur Bestimmung des Ergebnisses des laufenden bzw. angepassten Verarbeitungsprozesses herangezogen, wobei die Referenzzeitspur für Zeitpunkte vor dem Gegenwartszeitpunkt einen ersten Wert, insbesondere 1, und für Zeitpunkte nach dem Gegenwartszeitpunkt einen zweiten Wert, insbesondere 0 oder -1, enthält. Durch die Referenzzeitspur können dem künstlichen neuronalen Netzwerk Informationen darüber übermittelt werden, welche Werte der übergebenen Prozessparameter Vergangenheitswerte bzw. Zukunftswerte sind.

In einer weiteren Ausführungsform weist das Vorhersagemodul ein erstes künstliches neuronales Netzwerk und ein zweites künstliches neuronales Netzwerk auf. Das erste künstliche neuronale Netzwerk erhält die Vergangenheitswerte des wenigstens einen Klima- und/oder Produktparameters und ermittelt eine latente Variable als Ausgabe. Das zweite künstliche neuronale Netzwerk erhält die vom ersten künstlichen neuronalen Netzwerk ermittelte latente Variable sowie die Zukunftswerte des wenigstens einen Klima- und/oder Produktparameters und bestimmt anhand der latenten Variable und der Zukunftswerte das Ergebnis des laufenden bzw. angepassten Verarbeitungsprozesses. Auf diese Weise können die künstlichen neuronalen Netze einfacher ausgestaltet sein. Die latente Variable kann als abstrakte Eigenschaft des Produkts, der Produktumgebung und/oder des Verarbeitungsgerätes zum Gegenwartszeitpunkt aufgefasst werden, zum Beispiel als Kaliber des Produkts.

Das Komponentensteuermodul kann die Komponenten des wenigstens einen Verarbeitungsgeräts derart ansteuern, dass der angepasste Verarbeitungsprozess durchgeführt wird, wodurch der angepasste Verarbeitungsprozess unmittelbar umgesetzt wird.

Um ausreichend schnell auf Unregelmäßigkeiten reagieren zu können, kann in regelmäßigen Abständen, insbesondere alle 30 Sekunden bestimmt werden, ob das Vorhersage-Ergebnis dem Wunsch-Ergebnis genügend entspricht, insbesondere werden dabei die der Bestimmung vorgelagerten Schritte auch ausgeführt, d.h. zumindest die Schritte a) bis e).

Ferner wird die Aufgabe gelöst durch eine Regeleinheit für ein Verarbeitungsgerät, wobei das Verarbeitungsgerät ein Gargerät ist, die dazu eingerichtet ist, ein zuvor beschriebenes Verfahren durchzuführen.

Die Aufgabe wird zudem gelöst durch ein Verarbeitungsgerät, wobei das Verarbeitungsgerät ein Gargerät ist, mit einem Prozessraum, wobei der Prozessraum ein Garraum ist, zum Verarbeiten eines Produkts gemäß einem Verarbeitungsprozess, mehreren Komponenten, die eine Prozessumgebung im Prozessraum beeinflussen, und einer Regeleinheit wie zuvor beschrieben zur Regelung des Verarbeitungsgerätes.

Ferner wird die Aufgabe gelöst durch ein Computerprogramm mit Programmcodemitteln, um die Schritte eines zuvor beschriebenen Verfahrens durchzuführen, wenn das Computerprogramm auf einem Computer oder einer Regeleinheit ausgeführt wird, insbesondere auf einer zuvor beschriebenen Regeleinheit für ein Verarbeitungsgerät.

Die Aufgabe wird auch gelöst durch einen computerlesbaren Datenträger, auf dem ein zuvor beschriebenes Computerprogramm gespeichert ist.

Die zum Verfahren beschriebenen Merkmale und Vorteile gelten gleichermaßen für die Regeleinheit, das Verarbeitungsgerät, das Computerprogramm und den Datenträger und umgekehrt.

Aufzählungen mehrerer Komponenten mit "und/oder", z.B. "A, B und/oder C" sind als eine Offenbarung einer beliebigen Kombination der Komponenten zu verstehen, d.h. als "A und/oder B und/oder C".

Beispielsweise ist das Verarbeitungsgerät ein Gargerät als Zubereitungsgerät und sind/ist das Produkt ein Lebensmittel; der Verarbeitungsprozess ein Zubereitungsprozess; eine Verarbeitungsphase eine Zubereitungsphase; ein Verarbeitungsschritt ein Zubereitungsschritt; das Prozessergebnis ein Zubereitungsergebnis; die Prozessparameter Zubereitungsparameter; der Prozessraum ein Zubereitungsraum; die Prozessumgebung eine Zubereitungsumgebung, wie das Klima im Zubereitungsraum; die Umgebungsparameter Klimaparameter; das Umgebungsmodul ein Klimamodul; und/oder das Prozessergebnismodul ein Zubereitungsergebnismodul. Diese Begriffe können durch die gesamte Anmeldung und Ansprüche hinweg substituiert werden, um eine Beschreibung eines speziellen Ausführungsbeispiels zu erhalten.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1 ein erfindungsgemäßes Verarbeitungsgerät mit einer erfindungsgemäßen Regeleinheit zur Durchführung des erfindungsgemäßen Verfahrens,
- Figur 2 ein schematisches Flussdiagramm zur Erläuterung des erfindungsgemäßen Verfahrens,
- Figur 3 eine schematische Darstellung des Informationsflusses während der Durchführung des Verfahrens gemäß Figur 2, und
- Figur 4 eine schematische Darstellung mehrerer Verarbeitungsgeräte, die einen zusammenhängenden Verarbeitungsprozess durchführen und von einer erfindungsgemäßen Regeleinheit kontrolliert werden.

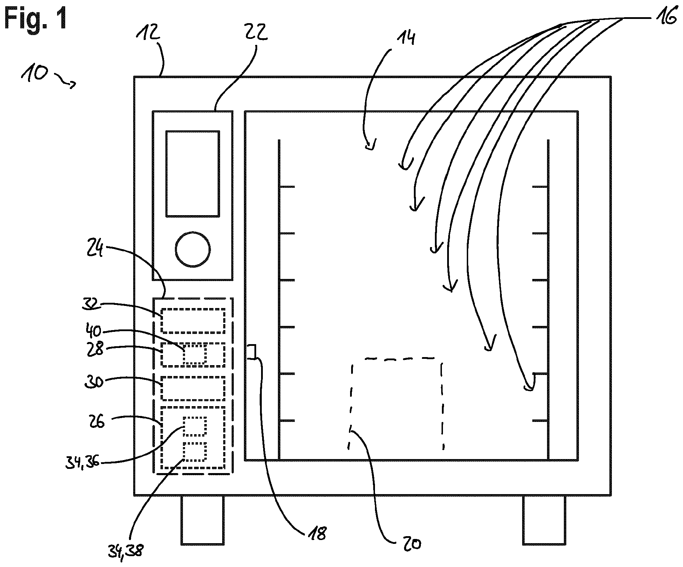

In Figur 1 ist schematisch ein Verarbeitungsgerät 10, hier anhand des Beispiels eines Gargeräts 12, dargestellt.

Das Verarbeitungsgerät 10 ist für den Profieinsatz in Restaurants, Kantinen, Großküchen und der Großgastronomie vorgesehen. Es kann sich hier beispielsweise um einen Kombidämpfer handeln, der unterschiedliche Speisen mit Heißluft und/oder Heißdampf verarbeiten kann. Zusätzlich kann das Verarbeitungsgerät 10 eine Mikrowellenquelle zum Verarbeiten von Produkten mittels Mikrowellen aufweisen.

Im gezeigten Ausführungsbeispiel hat das Verarbeitungsgerät 10 einen Garraum bzw. Prozessraum 14, in dem mehrere Einschübe 16 vorgesehen sind, mehrere Sensoren 18 zur Messung eines Umgebungsparameters und/oder Produktparameters, mehrere Komponenten 20 zur Erzeugung einer gewünschten Prozessumgebung im Prozessraum 14, Ein-/Ausgabemittel 22 sowie eine Regeleinheit 24.

Die lediglich angedeuteten Komponenten 20 sind beispielsweise eine Heizvorrichtung, eine Mikrowellenquelle, ein Lüfterrad und/oder ein Dampferzeuger.

Diese Komponenten 20 werden von der Regeleinheit 24 derart kontrolliert, dass sich im Prozessraum 14 eine gewünschte Prozessumgebung, d. h. ein gewünschtes Klima zum Verarbeiten des Produkts einstellt. Das Klima im Prozessraum 14 wird beispielsweise durch Umgebungsparameter charakterisiert, wie der Temperatur und/oder der Feuchte im Prozessraum 14.

Das Klima und somit die Umgebungsparameter werden vor allem durch die Komponenten 20 beeinflusst, sodass durch das Verarbeitungsgerät 10 Einfluss auf die Umgebungsparameter genommen werden kann.

Dies geschieht üblicherweise durch Steuerung bzw. Regelung der Kontrollparameter der Komponenten 20, die zur Ansteuerung der Komponenten 20 dienen. Kontrollparameter sind beispielsweise die Lüfterdrehzahl oder die Heizleistung.

Im Folgenden wird zur Vereinfachung häufig lediglich von Umgebungsparametern gesprochen, wobei hierbei auch immer entsprechende Kontrollparameter gemeint sind.

Umgebungsparameter bzw. Parameter der Prozessumgebung sind Werte bzw. Parameter, die die Eigenschaften der Umgebung des Produkts, zum Beispiel im Prozessraum 14, und keine Eigenschaft des Produkts selbst beschreiben. Beispielsweise sind dies die Temperatur in der Mitte des Prozessraums 14, aber auch die Intensität von Mikrowellen- und/oder Infrarotstrahlung.

Im Gegensatz zu den Umgebungsparametern stehen Produktparameter bzw. die Parameter des Produkts. Dies sind Eigenschaften des Produkts selbst, das heißt also Parameter, die auch nach der Entnahme des Produkts aus dem Garraum vorhanden sind. Diese Parameter sind beispielsweise die Kerntemperatur des Produkts und die Bräunung des Produkts.

Die Produktparameter sind wesentlich für die Qualität und Sicherheit des fertig verarbeiteten Produkts, das heißt des Prozessergebnisses, da diese zum Beispiel im Falle von Lebensmittel unter anderem über den Geschmack entscheiden.

Somit können verarbeitete Produkte bzw. das gewünschte Ergebnis eines Verarbeitungsprozesses durch die Produktparameter am Ende des Verarbeitungsprozesses definiert werden. Beispielsweise bestimmen die Produktparameter Geschmack, Aussehen, etc. eines fertig gegarten Gerichts.

Ein Koch oder die Regeleinheit 24 im Falle eines automatisierten Verarbeitungsprozesses sind somit bemüht, die Produktparameter möglichst nahe an die gewünschten Produktparameter heranzuführen.

Hierzu weist die Regeleinheit 24 ein Vorhersagemodul 26, ein Kostenmodul 28, ein Anpassungsmodul 30 sowie ein Komponentensteuermodul 32 auf. Die Module 26, 28, 30, 32 können sowohl als Hardwaremodule als auch als Softwaremodule ausgeführt sein. Denkbar ist, dass eines oder mehrere der Module 26, 28, 30, 32 als Computerprogramm mit Programmcodemitteln auf einem computerlesbaren Datenträger der Regeleinheit 24 hinterlegt sind.

Falls die Module 26, 28, 30, 32 alle oder Teile davon als Softwaremodule ausgeführt sind, müssen sie nicht zwangsläufig getrennte Stücke an Software sein.

Zur Verarbeitung eines Produkts wird ein Verarbeitungsprozess durch das Verarbeitungsgerät 10 durchgeführt, der beispielsweise zuvor von einem Benutzer des Verarbeitungsgeräts 10 ausgewählt wurde. Der Verarbeitungsprozess ist maßgeblich durch die gewünschten Produktparameter nach Abschluss des Verarbeitungsprozesses bestimmt und enthält üblicherweise Umgebungsparameter bzw. Kontrollparameter der die Umgebungsparameter beeinflussenden Komponenten 20, um auf eine bestimmte Weise das Produkt zu verarbeiten und die gewünschten Produktparameter zu erreichen.

Der Verarbeitungsprozess enthält auch das gewünschte Prozessergebnis als Wunsch-Ergebnis, sodass dies der Regeleinheit 24 vorliegt.

Der Verarbeitungsprozess kann somit als Rezept zur Zubereitung des Produkts, in diesem Falle eines Lebensmittels angesehen werden.

Im Falle eines Garprozesses als Verarbeitungsprozess oder als eine Verarbeitungsphase in einem Verarbeitungsprozess wird dies besonders deutlich, da beispielsweise eine Anbratphase und anschließend eine Garphase im Verarbeitungsprozess enthalten sind.

Ein Verarbeitungsprozess enthält im Rahmen dieser Erfindung den zukünftigen zeitlichen Soll-Verlauf wenigstens eines Umgebungsparameters bzw. wenigstens eines Kontrollparameters, der den wenigstens einen Umgebungsparameter beeinflusst.

Die Regeleinheit 24 führt den Verarbeitungsprozess aus, indem sie die Komponenten 20 derart kontrolliert, dass der zeitliche Soll-Verlauf der Umgebungsparameter möglichst genau verfolgt wird. Dies erfolgt durch das Komponentensteuermodul 32.

Während des Verlaufs eines Verarbeitungsprozesses sind jedoch üblicherweise Anpassungen am Verarbeitungsprozess, das heißt am Soll-Verlauf der Umgebungsparameter des Verarbeitungsprozesses, notwendig, um das Wunsch-Ergebnis E_{w}, also das gewünschte Prozessergebnis, möglichst genau zu erreichen.

Das Wunsch-Ergebnis Ew sowie auch das Vorhersage-Ergebnis E_{V} und das angepasste Ergebnis E_{A} enthalten wenigstens einen Ergebniswert wenigstens eines Produktparameters L₁ - Lₙ, insbesondere der Kerntemperatur, der Bräunung, eines oder mehreren Produktsensorischen Attributen und/oder des Wassergehalts des Produkts. Das Wunsch-Ergebnis beschreibt demnach den nach Abschluss des Verarbeitungsprozesses gewünschten Zustand des Produkts. Hierzu kommen das Vorhersagemodul 26, das Kostenmodul 28 und das Anpassungsmodul 30 zum Einsatz.

Das Vorhersagemodul 26 umfasst beispielsweise ein Modell 34, das ein Maschinenlernmodell, ein empirisches Modell der Prozessumgebung mit Zeitabhängigkeit, ein semi-physikalisches Modell, wie ein mathematisches Modell basierend auf vereinfachten physikalisch-chemischen Zusammenhängen, und/oder ein physikalisches Modell, wie eine FEM-Simulation sein.

Beispielsweise ist das Maschinenlernmodell ein trainiertes künstliches neuronales Netzwerk, ein Entscheidungsbaum oder wenigstens ein Random Forest.

Im gezeigten Ausführungsbeispiel umfasst das Vorhersagemodul 26 zwei verschiedene Modelle 34, nämlich ein Umgebungsmodul 36 sowie ein Prozessergebnismodul 38.

Das Umgebungsmodul 36 umfasst beispielsweise ein künstliches neuronales Netzwerk, das dazu trainiert ist, auf Basis von Vergangenheitswerten wenigstens eines Umgebungsparameters und/oder wenigstens eines Produktparameters Zukunftswerte für wenigstens einen Umgebungsparameter bereitzustellen.

Das Prozessergebnismodul 38 umfasst beispielsweise ebenfalls ein künstliches neuronales Netzwerk, das darauf trainiert ist, auf Basis der vorhergesagten Zukunftswerte des Umgebungsmoduls und Produktparametern auch das Ergebnis des laufenden bzw. angepassten Verarbeitungsprozesses vorherzusagen, das heißt die Ergebniswerte der entsprechenden Produktparameter nach Abschluss des entsprechenden Verarbeitungsprozesses auszugeben.

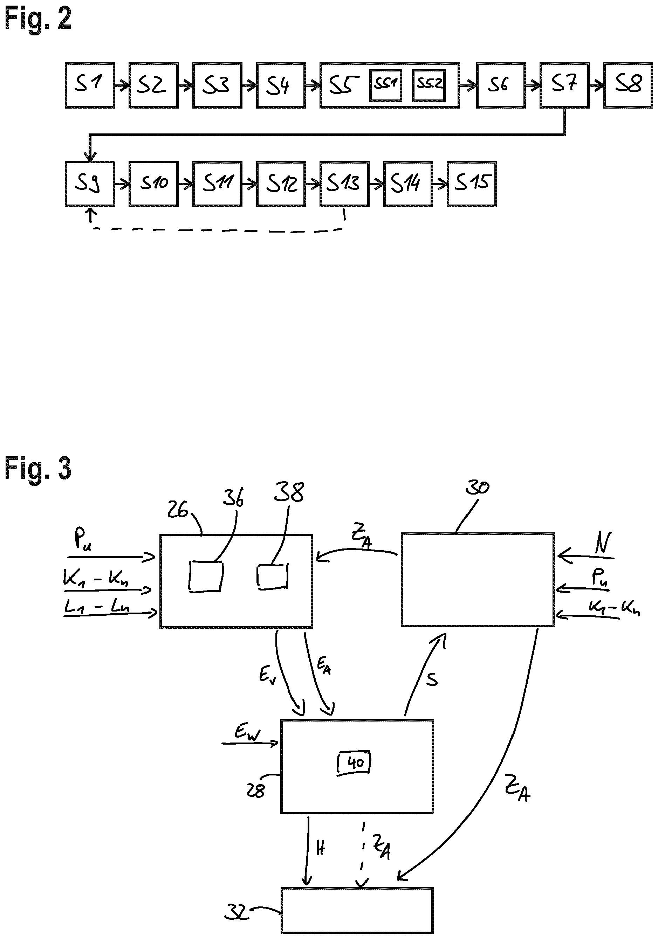

Zur Überprüfung, ob eine Anpassung des Verarbeitungsprozesses notwendig ist, führt die Regeleinheit das in Figur 2 dargestellte Verfahren durch.

In einem ersten Schritt S1 hat die Regeleinheit 24 das Wunsch-Ergebnis Ew bereits erhalten, beispielsweise durch Auslesen des Wunsch-Ergebnisses Ew aus dem Verarbeitungsprozess.

Anschließend erhält die Regeleinheit 24, beispielsweise durch Auslesen der Sensoren 18, aktuelle Werte wenigstens eines Umgebungsparameters in der Umgebung des Produkts, das heißt im Prozessraum 14 (Schritt S2). Die Umgebungsparameter können beispielsweise die Prozessraumtemperatur, die Feuchte im Prozessraum 14, der momentane Energieeintrag in das Produkt, die Lüfterdrehzahl eines Lüfterrads im Prozessraum 14, die Leistung einer Mikrowellenquelle, das Maß an Wrasenniederschlagung, das Entfeuchtungsverhalten und/oder der Betriebszustand von den Komponenten 20, insbesondere Energiequelle, des Verarbeitungsgeräts 10 sein.

Im nächsten Schritt S3 erhält die Regeleinheit 24, beispielsweise durch Auslesen weiterer Sensoren 18, aktuelle Werte von Produktparametern L₁ bis Lₙ. Die Produktparameter sind beispielsweise die Temperatur, insbesondere die Kerntemperatur des Produkts, die Bräunung der Oberfläche des Produkts, ein oder mehrere Produktsensorische Attribute des Produkts, wie die Knusprigkeit oder der Biss, der Wassergehalt des Produkts, der Typ des Produkts, die Klasse des Produkts, die Größe des Produkts, die Masse des Produkts, die Dicke des Produkts und/oder die Vorbehandlung des Produkts.

Die Umgebungsparameter K₁ bis Kₙ sowie die Produktparameter L₁ bis Lₙ werden anschließend in Schritt S4 an das Vorhersagemodul 26 übergeben. Dieser und die folgenden Schritte sind detailliert in Figur 3 dargestellt, die den Informationsfluss zwischen den einzelnen Modulen 26, 28, 30, 32 der Regeleinheit 24 illustriert.

Außerdem kann das Vorhersagemodul 26 zeitunabhängige Prozessparameter Pᵤ und/oder zukünftige Soll-Werte des wenigstens einen Umgebungsparameters K₁ bis Kₙ bzw. Kontrollparameter des laufenden Verarbeitungsprozesses erhalten.

Zeitunabhängige Prozessparameter sind durch äußere Gegebenheiten vorgegeben und ändern sich über den Zeitraum eines Verarbeitungsprozesses nicht wesentlich. Ein zeitunabhängiger Prozessparameter ist daher konstant, sodass die Zukunftswerte und die Vergangenheitswerte eines zeitunabhängigen Prozessparameters Spezifikationen entnommen oder einmalig gemessen werden können.

Zeitunabhängige Prozessparameter sind zum Beispiel die Größe des Prozessraumes 14, der Gerätetyp des Verarbeitungsgerätes 10, die Umgebungstemperatur des Verarbeitungsgerätes 10, der Typ bzw. die Klasse des Produkts, die Platzierung des Produkts im Prozessraum 14, die Höhe des Aufstellortes des Verarbeitungsgeräts 10 über dem Meeresspiegel, etc.

Außerdem kann das Vorhersagemodul 26 auch die zuvor übermittelten Vergangenheitswerte des Umgebungsparameters K₁ bis Kₙ erhalten oder hinterlegt haben, um diese zu verwenden.

Das Vorhersagemodul 26 bestimmt nun anhand aller oder eines Teils der zuvor genannten Parameter und Eingangsdaten das Ergebnis E_{L} des laufenden Verarbeitungsprozesses (Schritt S5), das im Folgenden als Vorhersage-Ergebnis Eᵥ bezeichnet wird.

Im gezeigten Ausführungsbeispiel erhält zunächst in Schritt S5.1 das Umgebungsmodul 36 die Umgebungsparameter K₁ bis Kₙ und ermittelt anhand dessen die Zukunftswerte, das heißt die wahrscheinlich zukünftigen Werte der oder wenigstens eines Umgebungsparameters K₁ bis Kₙ und übergibt diese Zukunftswerte an das Prozessergebnismodul 38.

In Schritt S5.2 ermittelt das Prozessergebnismodul 38 nun anhand der zukünftigen Umgebungsparameter, das heißt der Ausgabe des Umgebungsmoduls 36, sowie den aktuellen Werten der Produktparameter L₁ bis Lₙ, den zeitunabhängigen Prozessparameter Pᵤ und gegebenenfalls weitere Informationen.

Das Prozessergebnismodul 38 gibt als Ausgabe das Vorhersage-Ergebnis Eᵥ des laufenden Verarbeitungsprozesses aus, beispielsweise in Form von Ergebniswerten von Produktparametern L₁ bis Lₙ, die das Produkt voraussichtlich nach Abschluss des Verarbeitungsprozesses haben wird.

Denkbar ist auch, dass einem künstlichen neuronalen Netz des Vorhersagemoduls 26 sowohl Vergangenheitswerte als auch Zukunftswerte eines Prozessparameters übergeben werden, insbesondere als eine einzige Zeitspur. In diesem Fall kann dem künstlichen neuronalen Netz zudem eine Referenzzeitspur bereitgestellt werden, die zur Bestimmung des Ergebnisses des laufenden bzw. angepassten Verarbeitungsprozesses herangezogen wird.

Die Referenzzeitspur enthält für Zeitpunkte vor dem Gegenwartszeitpunkt einen ersten Wert, insbesondere 1, und für Zeitpunkte nach dem Gegenwartszeitpunkt einen zweiten Wert, insbesondere 0 oder -1. Durch die Referenzzeitspur kann dem künstlichen neuronalen Netzwerk Informationen darüber übermittelt werden, welche Werte der übergebenen Prozessparameter in der Vergangenheit bzw. in der Zukunft liegen, d.h. Vergangenheitswerte bzw. Zukunftswerte sind.

Anschließend übergibt das Vorhersagemodul 26 das Vorhersage-Ergebnis E_{V} an das Kostenmodul 28.

Das Kostenmodul 28 hat zudem das Wunsch-Ergebnis Ew erhalten.

Im nächsten Schritt S7 bestimmt das Kostenmodul, ob das Vorhersage-Ergebnis E_{V} dem Wunsch-Ergebnis Ew genügend entspricht.

Hierzu weist das Kostenmodul 28 eine Kostenfunktion 40 auf, die einen Kostenwert in Abhängigkeit der Abweichung des Vorhersage-Ergebnisses E_{V} vom Wunsch-Ergebnis E_{W} bestimmt.

Beispielsweise vergleicht die Kostenfunktion 40 jeden Ergebniswert der Produktparameter L₁ bis Lₙ des Wunsch-Ergebnisses Ew mit dem jeweiligen Ergebniswert der Produktparameter L₁ bis Lₙ des Vorhersage-Ergebnisses E_{V}. Hierzu wird beispielsweise die Differenz der Ergebniswerte einander entsprechender Produktparameter gebildet. Diese Differenz kann quadriert werden, um quadratische Abweichungen zu bestimmen.

Anschließend gewichtet es die Abweichungen mit einem Gewichtungsfaktor und summiert die gewichteten Abweichungen.

Dem Kostenmodul 28 können zudem Daten zum Ressourcenverbrauch und/oder Emissionen des Verarbeitungsgerätes 10 zugeführt werden oder es ermittelt diese.

Die Kostenfunktion 40 berücksichtigt diese Informationen über den Ressourcenverbrauch und/oder die Emission derart, dass ein hoher Ressourcenverbrauch oder eine hohe Emission zu einem erhöhten Kostenwert führen.

Der Grad der Erhöhung des Kostenwerts durch Ressourcenverbrauch und/oder Emissionen kann beispielsweise vom Benutzer voreingestellt werden.

Die so erhaltene Summe bzw. der so erhaltene Wert stellt den Kostenwert dar.

Das Kostenmodul 28 weist zudem einen vorbestimmten Schwellwert auf, der angibt, welche Abweichungen zwischen dem Wunsch-Ergebnis Ew und dem Vorhersage-Ergebnis E_{V} als akzeptabel angesehen werden.

Der Schwellwert kann beispielsweise durch den Benutzer eingestellt werden.

Das Kostenmodul 28 bestimmt nun, ob der ermittelte Kostenwert unterhalb oder oberhalb des vorbestimmten Schwellwerts liegt.

Liegt der Kostenwert unterhalb des Schwellwerts, wird das gewünschte Prozessergebnis erreicht, sodass keine Anpassungen am Verarbeitungsprozess nötig sind. Die Komponenten 20 des Verarbeitungsgerätes 10 werden durch das Komponentensteuermodul 32 gemäß dem aktuellen Verarbeitungsprozess weiter angesteuert. Beispielsweise übergibt das Kostenmodul 28 einen entsprechenden Hinweis H an das Komponentensteuermodul 32 (Schritt S8).

Liegt der Kostenwert jedoch oberhalb des vorbestimmten Schwellwerts, so wird das gewünschte Prozessergebnis nicht mit hinreichender Genauigkeit erreicht.

Eine Anpassung des Verarbeitungsprozesses ist daher notwendig.

Ein entsprechendes Signal S, das beispielsweise auch den Kostenwert enthält, wird an das Anpassungsmodul 30 vom Kostenmodul 28 übermittelt (Schritt S9).

Im nächsten Schritt S10 passt das Anpassungsmodul 30 den aktuell laufenden Verarbeitungsprozess in Abhängigkeit des ermittelten Kostenwerts und unter Berücksichtigung der Kostenfunktion an, sodass der Kostenwert verringert wird.

Dies geschieht durch Anpassen wenigstens eines Wertes wenigstens eines Kontrollparameters oder wenigstens eines Kontrollparameter und eines Umgebungsparameters des laufenden bzw. anzupassenden Verarbeitungsprozesses.

Außerdem kann das Anpassungsmodul wenigstens eine Nebenbedingung N erhalten, die die Grenzen der Anpassung vorgibt.

Diese Grenzen können situationsbedingt sein, wie die Grenzen der Umgebungsparameter, die Trägheit der Prozessumgebung, die Höhe des Aufstellortes des Verarbeitungsgerätes 10 über dem Meeresspiegel. Denkbar ist jedoch auch, dass die wenigstens eine Nebenbedingung N eine Wunschbedingung ist, die beispielsweise vom Benutzer vorgegeben wurde. Beispiele für eine Wunschbedingung sind eine monoton steigende oder fallende Temperatur und/oder ein maximal verfügbares Kontingent einer Ressource, beispielsweise um den Wasserverbrauch zu regulieren.

Auch kann der Ressourcenverbrauch der Verarbeitungsgeräte 10 bei der Durchführung des Verarbeitungsprozesses eine Nebenbedingung sein. Dabei kann der Verbrauch einer oder mehrerer bestimmten Ressourcen einzeln oder eine Kombination des Verbrauchs verschiedener bzw. aller Ressourcen als Nebenbedingung vorgegeben werden, z.B. vom Benutzer.

Außerdem kann das Anpassungsmodul 30 auch die zeitunabhängigen Prozessparameter Pᵤ und/oder zukünftige Soll-Werte wenigstens eines Umgebungsparameters K₁ bis Kₙ erhalten und zur Anpassung heranziehen.

Zur Anpassung kann das Anpassungsmodul 30 die oben genannten Eingaben heranziehen und ein geeignetes Anpassungsverfahren verwenden.

Als Anpassungsverfahren eignen sich beispielsweise ein Gradientenverfahren, ein Simplexverfahren, ein Nelder Mead Verfahren, ein evolutionärer Algorithmus und/oder eine COBYLA (Constrained optimization by linear approximation). Insbesondere kann die Anpassung iterativ erfolgen.

Durch die Anpassung wird vom Anpassungsmodul 30 ein angepasster Verarbeitungsprozess Z_{A} erzeugt.

In Schritt S11 wird der angepasste Verarbeitungsprozess Z_{A} an das Vorhersagemodul 26 übergeben (Schritt S11).

In gleicher Weise wie zu Schritt S5 ausgeführt, bestimmt das Vorhersagemodul 26 nun ein Ergebnis eines Verarbeitungsprozesses, und zwar das Ergebnis des Verarbeitungsprozesses, wenn ab sofort der angepasste Verarbeitungsprozess Z_{A} anstelle des aktuell laufenden Verarbeitungsprozesses durchgeführt würde. Dieses Ergebnis wird im Folgenden angepasstes Ergebnis E_{A} genannt. Auch dieses Ergebnis entspricht von Form und Inhalt her den zuvor beschriebenen Ergebnissen E_{V}, E_{W} (Schritt S12).

Das angepasste Ergebnis E_{A} wird nun an das Kostenmodul 28 übergeben.

Dort wird in Schritt S13 analog zu dem in Schritt S7 beschriebenen Vergleich zwischen dem Wunsch-Ergebnis E_{w} und dem angepassten Ergebnis E_{A} mittels der Kostenfunktion 40 ein Kostenwert bestimmt und wiederum mit dem Schwellwert verglichen.

Liegt der Kostenwert, der aus dem Vergleich zwischen dem angepassten Ergebnis E_{A} und dem Wunsch-Ergebnis Ew erhalten wird, immer noch oberhalb des Schwellwertes, werden die Schritte S9 bis S13 wiederholt.

Das heißt, der angepasste Verarbeitungsprozess Z_{A} wird nochmals mittels des Anpassungsmoduls 30 angepasst, es wird nochmals mittels des Vorhersagemoduls 26 ein angepasstes Ergebnis E_{A} des nochmals angepassten Verarbeitungsprozesses bestimmt, und mittels des Kostenmoduls 28 ein zugehöriger Kostenwert bestimmt.

Diese Anpassungsschleife, d. h. die Schritte S9 bis S13, wird so oft wiederholt, bis der ermittelte Kostenwert für einen angepassten Verarbeitungsprozess Z_{A} unterhalb des Schwellwertes liegt.

Liegt der Kostenwert unterhalb des Schwellwerts, wird in Schritt S14 der angepasste Verarbeitungsprozess Z_{A} an das Komponentensteuermodul 32 übergeben. Dies kann durch das Kostenmodul 28, aber auch durch das Anpassungsmodul 30 oder ein beliebiges anderes Modul erfolgen.

Das Komponentensteuermodul 32 regelt nun in Schritt S15 das Verarbeitungsgerät 10, sodass der angepasste Verarbeitungsprozess Z_{A} ausgeführt wird.

Die Schritte S1 bis S15 können in regelmäßigen Abständen wiederholt werden, um sicherzustellen, dass das Wunsch-Ergebnis Ew mit genügender Genauigkeit erreicht wird. Beispielsweise wird das Verfahren alle 30 Sekunden wiederholt.

Auf diese Weise wird der Verarbeitungsprozess mit hoher Genauigkeit und unter Verwendung von beliebigen Vorhersagemethoden flexibel angepasst, um zu gewährleisten, dass das gewünschte Prozessergebnis mit der gewünschten Genauigkeit erreicht wird.

Im zuvor beschriebenen Beispiel wurde lediglich ein Verarbeitungsgerät 10, nämlich ein Gargerät 12 verwendet, um das Produkt zu verarbeiten.

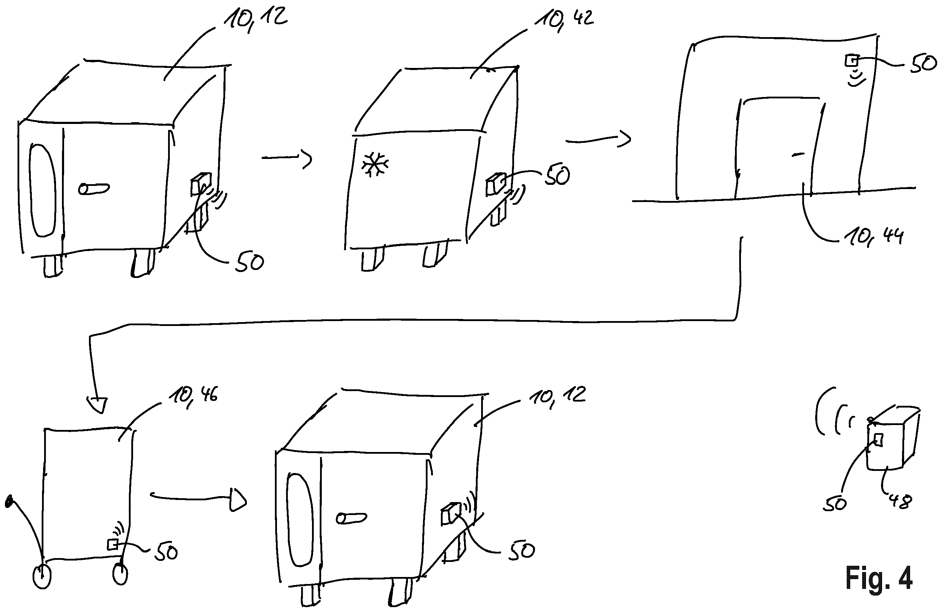

Diese Einschränkung diente jedoch lediglich der Veranschaulichung. In Figur 4 ist ein deutlich komplexerer Verarbeitungsprozess dargestellt, der auf verschiedenen Verarbeitungsgeräten 10 durchgeführt wird.

Die verwendeten Verarbeitungsgeräte 10 umfassen zum einen ein Gargerät 12, wie zuvor beschrieben, zum andern ein Abkühlgerät 42 (auch Chiller genannt), ein Lagergerät 44, hier ein Lagerraum, und ein Transportgerät 46, das im gezeigten Ausführungsbeispiel ein Hordengestellwagen ist.

Die verwendeten Verarbeitungsgeräte 10, also das Abkühlgerät 42, das Lagergerät 44, also der Lagerraum, und das Transportgerät 46 weisen zumindest Sensoren 18 zur Messung von Umgebungsparametern und ggf. Komponenten 20 zu Beeinflussung der Prozessumgebung auf.

Beispielsweise weist der Lagerraum, also das Lagergerät 44, eine Kühlvorrichtung auf, die die Temperatur im Lagerraum misst und beeinflussen kann. Der Lagerraum stellt dabei den Prozessraum mitsamt der Prozessumgebung dar.

Auch das Transportgerät, z.B. der Hordengestellwagen, wird für diese Zwecke als Prozessraum angesehen.

Außerdem ist eine übergeordnete Regeleinheit 48 vorgesehen, die mittels einer Kommunikationsschnittstelle 50, die auch in jedem der Verarbeitungsgeräte 10 enthalten ist, mit den Verarbeitungsgeräten 10 kommuniziert bzw. diese regelt.

Die übergeordnete Regeleinheit 48 weist zudem die zur Regeleinheit 24 beschriebenen Merkmale und Funktionalitäten auf.

Der illustrierte Verarbeitungsprozess hat sechs Verarbeitungsphasen. Der illustrierte Verarbeitungsprozess ist beispielsweise ein Prozess der zur Bankettverpflegung eingesetzt wird. Dabei bestimmt wenigstens einer der Umgebungsparameter K₁ - Kₙ und/oder wenigstens einer der Kontrollparameter das zu verwendende Verarbeitungsgerät 10, 12, 42, 44, 46 für wenigstens einen der Verarbeitungsschritte bzw. Verarbeitungsphase. Das zu verwendende Verarbeitungsgerät 10, 12, 42, 44, 46 ist somit Teil der Optimierung.

In einer ersten Verarbeitungsphase wird im ersten Verarbeitungsgerät 10, das das Gargerät 12 ist, ein Produkt, hier ein Lebensmittel, größtenteils gegart. Diese Verarbeitungsphase ist also ein Garprozess, der im Garraum des Gargeräts 12 durchgeführt wird.

In der nächsten Verarbeitungsphase wird das gegarte Produkt im Abkühlgerät 42, das dann das Verarbeitungsgerät 10 darstellt, abgekühlt. Es handelt sich somit um einen Abkühlprozess.

Das abgekühlte Produkt wird in der nächsten Verarbeitungsphase im Lagerraum, das heißt im Lagergerät 44 gelagert. Es wird somit ein Lagerprozess als Verarbeitungsphase durchgeführt.

Anschließend werden die Produkte mittels des Transportgeräts 46 in der nächsten Verarbeitungsphase - die ein Transportprozess ist - zum Ort des Banketts transportiert.

Dort werden die Produkte mittels des Gargeräts 12 in einer nächsten Verarbeitungsphase wieder erwärmt und warmgehalten, sodass die Verarbeitungsphase ein Warmhalteprozess ist. Das Gargerät 12 dient somit auch als Warmhaltegerät.

Anschließend können die Produkte serviert werden.

Die übergeordnete Regeleinheit 48 oder eine der Regeleinheiten 24 der Verarbeitungsgeräte 10 können nun die Module 26, 28, 30, 32 aufweisen und den Verarbeitungsprozess regeln bzw. anpassen. Die übergeordnete Regeleinheit 48 bzw. die Regeleinheit 24 passt zum Beispiel die Umgebungsparameter bzw. Kontrollparameter für mehrere, insbesondere alle Verarbeitungsgeräte 10 an.

Dabei werden die Parameter mehrerer verschiedener Verarbeitungsphasen verwendet, um den Verarbeitungsprozess anzupassen. Beispielsweise können bereits die Soll-Werte des Verarbeitungsprozesses für den Warmhalteprozess angepasst werden, wenn beim Abkühlprozess Abweichungen auftreten.

Auf diese Weise können gesamte, komplexe Verarbeitungsprozesse in mehreren Verarbeitungsgeräten 10 effektiv und mit hoher Qualität ausgeführt werden.

## Patentansprüche

1. Verfahren zum Regeln wenigstens eines Verarbeitungsgerätes (10) mit einem Prozessraum (14), wobei das wenigstens eine Verarbeitungsgerät (10) ein Gargerät (12) mit einem Garraum (14) ist, zum Verarbeiten eines Produkts gemäß einem Verarbeitungsprozess und mehreren Komponenten (20), die eine Prozessumgebung in wenigstens einem Prozessraum (14) beeinflussen, mittels einer Regeleinheit (24, 48) zur Regelung des wenigstens einen Verarbeitungsgerätes (10), wobei das Verfahren die folgenden Schritte umfasst:
a) Erhalten eines gewünschten Prozessergebnisses als Wunsch-Ergebnis (E_{w}) durch die Regeleinheit (24, 48),
b) Erhalten von wenigstens einem aktuellen Wert wenigstens eines Umgebungsparameters (K₁ - Kₙ) eines laufenden Verarbeitungsprozesses durch die Regeleinheit (24, 48), wobei der wenigstens eine Umgebungsparameter (K₁ - Kₙ) die Prozessraumtemperatur, die Feuchte, der Energieeintrag in das Produkt, die Lüfterdrehzahl eines Lüfters des wenigstens eines Verarbeitungsgeräts (10), die Leistung einer Mikrowellenquelle, das Maß an Ablöschung, das Entfeuchtungsverhalten und/oder der Betriebszustand von Komponenten (20) des wenigstens eines Verarbeitungsgerätes (10) ist,
c) Erhalten von wenigstens einem aktuellen Wert wenigstens eines Produktparameters (L₁ - Lₙ) des laufenden Verarbeitungsprozesses durch die Regeleinheit (24, 48), wobei der wenigstens eine Produktparameter (L₁ - Lₙ) die Kerntemperatur des Produkts, die Bräunung der Oberfläche des Produkts, ein oder mehrere lebensmittelsensorische Attribute des Produkts, der Wassergehalt des Lebensmittels, die Größe des Produkts, die Masse des Produkts, die Dicke des Produkts und/oder die Vorbehandlung des Produkts ist,
d) Vorhersagen des Ergebnisses des laufenden Verarbeitungsprozesses anhand des wenigstens einen erhaltenen aktuellen Wertes des wenigstens einen Umgebungsparameters (K₁ - Kₙ) und des wenigstens einen erhaltenen aktuellen Wertes des Produktparameters (L₁ - Lₙ) durch ein Vorhersagemodul (26) der Regeleinheit (24, 48), um ein Vorhersage-Ergebnis (Ev) zu erhalten, wobei das Vorhersage-Ergebnis (Eᵥ) das angepasste Ergebnis (E_{A}) und/oder das Wunsch-Ergebnis (E_{w}) wenigstens einen Ergebniswert wenigstens eines Produktparameters (L₁ - Lₙ) enthält,
e) Bestimmen, ob das Vorhersage-Ergebnis (Ev) dem Wunsch-Ergebnis (E_{W}) genügend entspricht durch ein Kostenmodul (28) der Regeleinheit (24, 48),
**gekennzeichnet durch** die Schritte:
f) Ermitteln eines angepassten Verarbeitungsprozesses (Z_{A}) durch Anpassen wenigstens eines Kontrollparameters, der den wenigstens einen Umgebungsparameter (K₁ - Kₙ) beeinflusst, durch ein Anpassungsmodul (30) der Regeleinheit (24, 48), wenn das Vorhersage-Ergebnis (Eᵥ) dem Wunsch-Ergebnis (E_{w}) nicht genügend entspricht,
g) Vorhersagen des Ergebnisses des angepassten Verarbeitungsprozesses (Z_{A}) durch das Vorhersagemodul (26) der Regeleinheit (24, 48), um ein angepasstes Ergebnis (E_{A}) zu erhalten,
h) Bestimmen, ob das angepasste Ergebnis (E_{A}) dem Wunsch-Ergebnis (E_{W}) genügend entspricht durch das Kostenmodul (28) der Regeleinheit (24, 48),
i) Wiederholen der Schritte f) bis h), wenn das angepasste Ergebnis (E_{A}) dem Wunsch-Ergebnis (E_{w}) nicht genügend entspricht, und
j) Übergeben des angepassten Verarbeitungsprozesses (Z_{A}) an ein Komponentensteuermodul (32) der Regeleinheit (24, 48), wenn das angepasste Ergebnis (E_{A}) dem Wunsch-Ergebnis (E_{W}) genügend entspricht.

2. Verfahren nach Anspruch 1, **dadurch gekennzeichnet, dass** der Verarbeitungsprozess mehrere Verarbeitungsschritte und/oder Verarbeitungsphasen aufweist, wobei das Produkt während des Verarbeitungsprozesses in zeitlicher Abfolge in unterschiedlichen Verarbeitungsgeräten (10) verarbeitet wird, von denen wenigstens ein Verarbeitungsgerät (10) das Gargerät (12) ist, wobei wenigstens einer der Umgebungsparameter (K₁ - Kₙ) und/oder wenigstens einer der Kontrollparameter das zu verwendende Verarbeitungsgerät (10) für wenigstens einen der Verarbeitungsschritte und/oder Verarbeitungsphasen bestimmt.

3. Verfahren nach Anspruch 1 oder 2, **dadurch gekennzeichnet, dass** das Kostenmodul (28) eine Kostenfunktion (40) umfasst, die einen Kostenwert in Abhängigkeit der Abweichung des angepassten Ergebnisses (E_{A}) oder des Vorhersage-Ergebnisses (Ev) vom Wunsch-Ergebnis (E_{W}) bestimmt,
wobei das Vorhersage-Ergebnis (Ev) oder das angepasste Ergebnis (E_{A}) dem Wunsch-Ergebnis (E_{W}) genügend entspricht, wenn der Kostenwert auf oder unterhalb eines vorbestimmen Schwellwertes liegt, und
wobei das Vorhersage-Ergebnis (Eᵥ) oder das angepasste Ergebnis (E_{A}) dem Wunsch-Ergebnis (E_{w}) nicht genügend entspricht, wenn der Kostenwert oberhalb des vorbestimmen Schwellwertes liegt,
insbesondere wobei die Kostenfunktion (40) für mehrere des wenigstens einen Produktparameters (L₁ - Lₙ) des Vorhersage-Ergebnisses (Ev), des angepassten Ergebnisses (E_{A}) und/oder des Wunsch-Ergebnisses (E_{W}) die Differenz zwischen wenigstens einem Ergebniswert des Vorhersage-Ergebnisses (Eᵥ) oder des angepassten Ergebnisses (E_{A}) und wenigstens einem Ergebniswert des Wunsch-Ergebnisses (E_{W}) ermittelt, und die wenigstens eine ermittelte Differenz gewichtet und/oder quadriert aufsummiert, um den Kostenwert zu erhalten.

4. Verfahren nach Anspruch 3, **dadurch gekennzeichnet, dass** das Anpassungsmodul (30) den wenigstens einen Kontrollparameter in Abhängigkeit der Kostenfunktion (40) und/oder des Kostenwerts derart anpasst, insbesondere iterativ anpasst, dass der Kostenwert verringert, insbesondere minimiert wird; und/oder
dass die Kostenfunktion (40) den Ressourcenverbrauch und/oder die Emission des wenigstens einen Verarbeitungsgeräts (10) bei der Bestimmung des Kostenwerts berücksichtigt, insbesondere derart, dass ein hoher Ressourcenverbrauch und/oder eine hohe Emission zu einem erhöhten Kostenwert führen.

5. Verfahren nach einem der vorhergehenden Ansprüche, **dadurch gekennzeichnet, dass** das Anpassungsmodul (30) wenigstens eine Nebenbedingung (N) erhält, die bei der Anpassung des wenigstens einen Kontrollparameters berücksichtigt wird, insbesondere wobei die wenigstens eine Nebenbedingung (N) eine Situationsbedingung wie die Grenzen der Umgebungsparameter, die Trägheit der Prozessumgebung, die Höhe des wenigstens einen Verarbeitungsgeräts (10) über dem Meeresspeigel, der Ressourcenverbrauch, und/oder eine Wunschbedingung ist, wie eine monoton steigende oder fallende Temperatur und/oder ein maximal verfügbares Kontingent einer Ressource.

6. Verfahren nach Anspruch 4 oder 5, **dadurch gekennzeichnet, dass** das Anpassungsmodul (30) den wenigstens einen Kontrollparameter mittels einem Gradientenverfahren, einem Simplex Verfahren, einem Nelder Mead Verfahren, einem evolutionären Algorithmus und/oder mittels COBYLA (Constrained optimization by linear approximation) anpasst.

7. Verfahren nach einem der vorhergehenden Ansprüche, **dadurch gekennzeichnet, dass** das Vorhersagemodul (26) und/oder das Anpassungsmodul (30) zudem zeitunabhängige Prozessparameter (Pᵤ) und/oder zukünftige Soll-Werte wenigstens eines Umgebungsparameters (K₁ - Kₙ) und/oder wenigstens eines Kontrollparameters, insbesondere gemäß dem laufenden oder angepassten Verarbeitungsprozess (Z_{A}) erhält und zur Vorhersage bzw. zur Anpassung heranzieht; und/oder
dass das Vorhersagemodul (26) zur Vorhersage wenigstens ein Maschinenlernmodell, insbesondere ein trainiertes künstliches neuronales Netzwerk, einen Entscheidungsbaum, wenigstens einen Random Forest, und/oder eine Gaußprozessregression, ein empirisches Modell der Prozessumgebung mit Zeitabhängigkeit, ein semi-physikalisches Modell, wie ein mathematisches Modell basierend auf vereinfachten physikalisch-chemischen Zusammenhängen, und/oder ein physikalisches Modell, wie eine FEM-Simulation, umfasst; und/oder
dass das Vorhersagemodul (26) wenigstens ein Umgebungsmodul (36) zur Vorhersage von Zukunftswerten wenigstens eines Umgebungsparameters (K₁ - Kₙ) und wenigstens ein Prozessergebnismodul (38) zur Vorhersage des Ergebnisses des laufenden oder angepassten Verarbeitungsprozesses (Z_{A}) aufweist, wobei das Prozessergebnismodul (38) die Ausgabe des Umgebungsmoduls (36) erhält.

8. Verfahren nach einem der vorhergehenden Ansprüche, **gekennzeichnet durch** die folgenden Schritte:
- Bereitstellen von Vergangenheitswerten des wenigstens einen Umgebungsparameters (K₁ - Kₙ) und/oder von Vergangenheitswerten des wenigstens einen Produktparameters (L₁ - Lₙ),
- Bereitstellen von Zukunftswerten des wenigstens einen Umgebungsparameters (K₁ - Kₙ) und/oder wenigstens eines Kontrollparameters, der den wenigstens einen Umgebungsparameter (K₁ - Kₙ) beeinflusst,
- Übergeben der Vergangenheitswerte und der Zukunftswerte an das Vorhersagemodul (26), und
- Bestimmen des Ergebnisses des laufenden Verarbeitungsprozesses durch das Vorhersagemodul (26) wenigstens anhand der Vergangenheitswerte und der Zukunftswerte des wenigstens einen Umgebungsparameters (K₁ - Kₙ) und/oder wenigstens eines Kontrollparameters, der den wenigstens einen Umgebungsparameter (K₁ - Kₙ) beeinflusst, und des wenigstens einen Produktparameters (L₁ - Lₙ).

9. Verfahren nach einem der vorhergehenden Ansprüche, **dadurch gekennzeichnet, dass** das Komponentensteuermodul (32) die Komponenten (20) des wenigstens einen Verarbeitungsgeräts (10) derart ansteuert, dass der angepasste Verarbeitungsprozess (Z_{A}) durchgeführt wird, und/oder
dass in regelmäßigen Abständen, insbesondere alle 30 Sekunden bestimmt wird, ob das Vorhersage-Ergebnis (Ev) dem Wunsch-Ergebnis (E_{W}) genügend entspricht, insbesondere werden dabei die der Bestimmung vorgelagerten Schritte auch ausgeführt, d.h. zumindest die Schritte a) bis e).

10. Regeleinheit für ein Verarbeitungsgerät (10), das ein Gargerät (12) ist, wobei die Regeleinheit (24, 48) dazu eingerichtet ist, ein Verfahren nach einem der vorhergehenden Ansprüche durchzuführen.

11. Verarbeitungsgerät (10), wobei das Verarbeitungsgerät (10) ein Gargerät (12) ist, mit einem Prozessraum (14), wobei der Prozessraum (14) ein Garraum ist, zum Verarbeiten eines Produkts gemäß einem Verarbeitungsprozess, mehreren Komponenten (20), die eine Prozessumgebung im Prozessraum (14) beeinflussen, und einer Regeleinheit (24, 48) zur Regelung des Verarbeitungsgerätes (10) gemäß Anspruch 10.

12. Computerprogramm mit Programmcodemitteln, um die Schritte eines Verfahrens nach einem der Ansprüche 1 bis 9 durchzuführen, wenn das Computerprogramm auf einem Computer oder einer Regeleinheit (24, 48) ausgeführt wird, insbesondere auf einer Regeleinheit (24, 48) für ein Verarbeitungsgerät (10) gemäß Anspruch 10.

13. Computerlesbarer Datenträger, auf dem ein Computerprogramm gemäß Anspruch 12 gespeichert ist.

## Claims

1. A method of controlling at least one processing device (10) comprising a process chamber (14), the at least one processing device (10) being a cooking device (12) having a cooking chamber (14), for processing a product in accordance with a processing process, and a plurality of components (20) that influence a process environment in at least one process chamber (14), by means of a control unit (24, 48) for controlling the at least one processing device (10), the method comprising the following steps:
(a) obtaining, by the control unit (24, 48), an aspired process result as a desired result (E_{w}),
(b) obtaining, by the control unit (24, 48), at least one current value of at least one environmental parameter (K₁ - Kₙ) of an ongoing processing process, wherein the at least one environmental parameter (K₁ - Kₙ) is the process chamber temperature, the humidity, the energy input into the product, the fan speed of a fan of the at least one processing device (10), the power of a microwave source, the degree of deglazing, the dehumidification behavior and/or the operating state of components (20) of the at least one processing device (10),
(c) obtaining, by the control unit (24, 48), at least one current value of at least one product parameter (L₁ - Lₙ) of the ongoing processing process, wherein the at least one product parameter (L₁ - Lₙ) is the core temperature of the product, the browning of the surface of the product, one or more food sensory attributes of the product, the water content of the food, the size of the product, the mass of the product, the thickness of the product, and/or the pretreatment of the product,
(d) predicting, by a prediction module (26) of the control unit (24, 48), the result of the ongoing processing process based on the at least one current value obtained of the at least one environmental parameter (K₁ - Kₙ) and the at least one current value obtained of the product parameter (L₁ - Lₙ) to obtain a prediction result (Ev), the prediction result (Ev), the adapted result (E_{A}) and/or the desired result (E_{W}) containing at least one result value of at least one product parameter (L₁ - Lₙ),
(e) determining, by a cost module (28) of the control unit (24, 48), whether the prediction result (Eᵥ) sufficiently corresponds to the desired result (E_{W}),
**characterized by** the steps of:
(f) establishing, by an adaptation module (30) of the control unit (24, 48), an adapted processing process (Z_{A}) by adapting at least one control parameter that influences the at least one environmental parameter (K₁ - Kₙ), if the prediction result (Eᵥ) does not sufficiently correspond to the desired result (E_{w}),
(g) predicting, by the prediction module (26) of the control unit (24, 48), the result of the adapted processing process (Z_{A}) to obtain an adapted result (E_{A}),
(h) determining, by the cost module (28) of the control unit (24, 48), whether the adapted result (E_{A}) sufficiently corresponds to the desired result (E_{W}),
(i) repeating steps (f) to (h) if the adapted result (E_{A}) does not sufficiently correspond to the desired result (E_{W}), and
(j) transferring the adapted processing process (Z_{A}) to a component control module (32) of the control unit (24, 48) if the adapted result (E_{A}) sufficiently corresponds to the desired result (E_{w}).

2. The method according to claim 1, **characterized in that** the processing process includes a plurality of processing steps and/or processing phases, wherein during the processing process, the product is processed in different processing devices (10) in time sequence, of which at least one processing device (10) is the cooking device (12), wherein at least one of the environmental parameters (K₁ - Kₙ) and/or at least one of the control parameters determines the processing device (10) to be used for at least one of the processing steps and/or processing phases.

3. The method according to claim 1 or 2, **characterized in that** the cost module (28) comprises a cost function (40) that determines a cost value as a function of the deviation of the adapted result (E_{A}) or the prediction result (Ev) from the desired result (E_{W}),
wherein the prediction result (Eᵥ) or the adapted result (E_{A}) sufficiently corresponds to the desired result (E_{W}) if the cost value is at or below a predetermined threshold value, and
wherein the prediction result (Eᵥ) or the adapted result (E_{A}) does not sufficiently correspond to the desired result (E_{w}) if the cost value is above the predetermined threshold value,
in particular wherein the cost function (40) establishes for a plurality of the at least one product parameter (L₁ - Lₙ) of the prediction result (Ev), of the adapted result (E_{A}) and/or of the desired result (E_{w}) the difference between at least one result value of the prediction result (Ev) or of the adapted result (E_{A}) and at least one result value of the desired result (E_{W}), and adds up the at least one established difference in a weighted and/or squared manner in order to obtain the cost value.

4. The method according to claim 3, **characterized in that** the adaptation module (30) adapts, in particular iteratively adapts, the at least one control parameter as a function of the cost function (40) and/or of the cost value such that the cost value is reduced, in particular minimized; and/or
**in that** the cost function (40) takes account of the consumption of resources and/or the emission of the at least one processing device (10) when determining the cost value, in particular such that a high consumption of resources and/or a high emission lead to an increased cost value.

5. The method according to any of the preceding claims, **characterized in that** the adaptation module (30) obtains at least one secondary condition (N) that is taken into account in the adaptation of the at least one control parameter, in particular wherein the at least one secondary condition (N) is a situation condition such as the limits of the environmental parameters, the inertia of the process environment, the height of the at least one processing device (10) above sea level, the consumption of resources, and/or a desired condition such as a monotonically increasing or decreasing temperature and/or a maximum available contingent of a resource.

6. The method according to claim 4 or 5, **characterized in that** the adaptation module (30) adapts the at least one control parameter by means of a gradient method, a simplex method, a Nelder-Mead method, an evolutionary algorithm and/or by means of COBYLA (constrained optimization by linear approximation).

7. The method according to any of the preceding claims, **characterized in that** the prediction module (26) and/or the adaptation module (30) furthermore obtain(s) time-independent process parameters (Pᵤ) and/or future set-point values of at least one environmental parameter (K₁ - Kₙ) and/or at least one control parameter, in particular in accordance with the ongoing or adapted processing process (Z_{A}), and use(s) them for the prediction or the adaptation, respectively; and/or
**in that** for predicting, the prediction module (26) comprises at least one machine learning model, in particular a trained artificial neural network, a decision tree, at least one random forest, and/or a Gaussian process regression, an empirical model of the process environment with time dependence, a semi-physical model, such as a mathematical model based on simplified physicochemical relationships, and/or a physical model, such as an FEM simulation; and/or
**in that** the prediction module (26) includes at least one environment module (36) for predicting future values of at least one environmental parameter (K₁ - Kₙ) and at least one process result module (38) for predicting the result of the ongoing or adapted processing process (Z_{A}), the process result module (38) obtaining the output of the environment module (36).

8. The method according to any of the preceding claims, **characterized by** the following steps:
- providing historical values of the at least one environmental parameter (K₁ - Kₙ) and/or historical values of the at least one product parameter (L₁ - Lₙ),
- providing future values of the at least one environmental parameter (K₁ - Kₙ) and/or at least one control parameter that influences the at least one environmental parameter (K₁ - Kₙ),
- transferring the historical values and the future values to the prediction module (26), and
- determining, by the prediction module (26), the result of the ongoing processing process at least based on the historical values and the future values of the at least one environmental parameter (K₁ - Kₙ) and/or at least one control parameter that influences the at least one environmental parameter (K₁ - Kₙ), and of the at least one product parameter (L₁ - Lₙ).

9. The method according to any of the preceding claims, **characterized in that** the component control module (32) drives the components (20) of the at least one processing device (10) such that the adapted processing process (Z_{A}) is carried out, and/or
**in that** a determination is made at regular intervals, in particular every 30 seconds, as to whether the prediction result (E_{V}) sufficiently corresponds to the desired result (E_{W}), wherein in particular the steps upstream of the determination are also carried out, i.e. at least steps (a) to (e).

10. A control unit for a processing device (10) which is a cooking device (12), wherein the control unit (24, 48) is configured to carry out a method according to any of the preceding claims.

11. A processing device (10), wherein the processing device (10) is a cooking device (12), comprising a process chamber (14), the process chamber (14) being a cooking chamber, for processing a product in accordance with a processing process, a plurality of components (20) that influence a process environment in the process chamber (14), and a control unit (24, 48) for controlling the processing device (10) according to claim 10.

12. A computer program comprising program code means to perform the steps of a method according to any of claims 1 to 9 when the computer program is executed on a computer or a control unit (24, 48), in particular on a control unit (24, 48) for a processing device (10) according to claim 10.

13. A computer-readable data carrier on which a computer program according to claim 12 is stored.

## Revendications

1. Procédé de réglage d'au moins un appareil de traitement (10) qui comprend un espace de processus (14), ledit au moins un appareil de traitement (10) étant un appareil de cuisson (12) qui présente un espace de cuisson (14), pour le traitement d'un produit conformément à un processus de traitement, et une pluralité de composants (20) qui influencent un environnement de processus dans au moins un espace de processus (14), au moyen d'une unité de réglage (24, 28) pour le réglage dudit au moins un appareil de traitement (10), le procédé comprenant les étapes suivantes :
a) l'obtention d'un résultat de processus souhaité en tant que résultat souhaité (E_{W}) au moyen de l'unité de réglage (24, 28),
b) l'obtention d'au moins une valeur actuelle d'au moins un paramètre d'environnement (K₁-Kₙ) d'un processus de traitement en cours au moyen de l'unité de réglage (24, 28), ledit au moins un paramètre d'environnement (K₁-Kₙ) étant la température d'espace de processus, l'humidité, l'apport d'énergie dans le produit, la vitesse de rotation de soufflante d'une soufflante dudit au moins un appareil de traitement (10), la puissance d'une source de microondes, le degré de déglaçage, le comportement de déshumidification et/ou l'état de fonctionnement de composants (20) dudit au moins un appareil de traitement (10),
c) l'obtention d'au moins une valeur actuelle d'au moins un paramètre de produit (L₁-Lₙ) du processus de traitement en cours au moyen de l'unité de réglage (24, 28), ledit au moins un paramètre de produit (L₁-Lₙ) étant la température à coeur du produit, le brunissement de la surface du produit, un ou plusieurs attributs alimentaires sensoriels du produit, la teneur en eau du produit alimentaire, la taille du produit, la masse du produit, l'épaisseur du produit et/ou le prétraitement du produit,
d) la prédiction du résultat du processus de traitement en cours sur la base de ladite au moins une valeur actuelle obtenue dudit au moins un paramètre d'environnement (K₁-Kₙ) et de ladite au moins une valeur actuelle obtenue du paramètre de produit (L₁-Lₙ) au moyen d'un module de prédiction (26) de l'unité de réglage (24, 28) pour obtenir un résultat de prédiction (Ev), le résultat de prédiction (Ev), le résultat adapté (E_{A}) et/ou le résultat souhaité (E_{W}) contenant au moins une valeur de résultat d'au moins un paramètre de produit (L₁-Lₙ),
e) la détermination si le résultat de prédiction (E_{V}) correspond suffisamment au résultat souhaité (E_{W}) au moyen d'un module de coût (28) de l'unité de réglage (24, 28),
**caractérisé par** les étapes suivantes :
f) la détermination d'un processus de traitement adapté (Z_{A}) par adaptation d'au moins un paramètre de contrôle influençant ledit au moins un paramètre d'environnement (K₁-Kₙ) au moyen d'un module d'adaptation (30) de l'unité de réglage (24, 28) lorsque le résultat de prédiction (Ev) ne correspond pas suffisamment au résultat souhaité (E_{W}),
g) la prédiction du résultat du processus de traitement adapté (Z_{A}) au moyen du module de prédiction (26) de l'unité de réglage (24, 28) pour obtenir un résultat adapté (E_{A}),
h) la détermination si le résultat adapté (E_{A}) correspond suffisamment au résultat souhaité (E_{W}) au moyen du module de coût (28) de l'unité de réglage (24, 28),
i) la répétition des étapes f) à h) lorsque le résultat adapté (E_{A}) ne correspond pas suffisamment au résultat souhaité (E_{W}), et
j) la transmission du processus de traitement adapté (Z_{A}) à un module de commande de composant (32) de l'unité de réglage (24, 28) lorsque le résultat adapté (E_{A}) correspond suffisamment au résultat souhaité (E_{W}).

2. Procédé selon la revendication 1, **caractérisé en ce que** le processus de traitement comprend une pluralité d'étapes de traitement et/ou de phases de traitement, le produit étant traité pendant le processus de traitement selon une séquence temporelle dans différents appareils de traitement (10) dont au moins un appareil de traitement (10) est l'appareil de cuisson (12), au moins l'un des paramètres d'environnement (K₁-Kₙ) et/ou au moins l'un des paramètres de contrôle déterminant l'appareil de traitement (10) à utiliser pour au moins l'une des étapes de traitement et/ou des phases de traitement.

3. Procédé selon la revendication 1 ou 2, **caractérisé en ce que** le module de coût (28) comprend une fonction de coût (40) qui détermine une valeur de coût en fonction de l'écart entre le résultat adapté (E_{A}) ou le résultat de prédication (E_{V}) et le résultat souhaité (E_{W}),
le résultat de prédiction (Ev) ou le résultat adapté (E_{A}) correspondant suffisamment au résultat souhaité (E_{W}) lorsque la valeur de coût est égale ou inférieure à une valeur seuil prédéterminée, et
le résultat de prédiction (Ev) ou le résultat adapté (E_{A}) ne correspondant pas suffisamment au résultat souhaité (E_{W}) lorsque la valeur de coût est supérieure à la valeur seuil prédéterminée,
la fonction de coût (40) déterminant en particulier pour plusieurs parmi ledit au moins un paramètre de produit (L₁-Lₙ) du résultat de prédiction (E_{V}), le résultat adapté (E_{A}) et/ou le résultat souhaité (E_{W}) la différence entre au moins une valeur de résultat du résultat de prédiction (E_{V}) ou du résultat adapté (E_{A}) et au moins une valeur de résultat du résultat souhaité (E_{W}) et totalise ladite au moins une différence déterminée de manière pondérée et/ou élevée au carré pour obtenir la valeur de coût.

4. Procédé selon la revendication 3, **caractérisé en ce que** le module d'adaptation (30) adapte, en particulier adapte itérativement ledit au moins un paramètre de contrôle en fonction de la fonction de coût (40) et/ou de la valeur de coût de sorte que la valeur de coût est réduite, en particulier minimisée ; et/ou
**en ce que** la fonction de coût (40) tient compte de la consommation de ressources et/ou de l'émission dudit au moins un appareil de traitement (10) lors de la détermination de la valeur de coût, en particulier de telle sorte qu'une consommation de ressources élevée et/ou une émission élevée mène à une valeur de coût élevée.

5. Procédé selon l'une des revendications précédentes, **caractérisé en ce que** le module d'adaptation (30) obtient au moins une condition secondaire (N) qui est prise en compte lors de l'adaptation dudit au moins un paramètre de contrôle, ladite au moins une condition secondaire (N) étant en particulier une condition de situation telle que les limites des paramètres d'environnement, l'inertie de l'environnement de processus, la hauteur dudit au moins un appareil de traitement (10) au-dessus du niveau de la mer, la consommation de ressources et/ou une condition souhaitée telle qu'une température augmentant ou baissant de manière monotone et/ou un contingent maximal disponible d'une ressource.

6. Procédé selon la revendication 4 ou 5, **caractérisé en ce que** le module d'adaptation (30) adapte ledit au moins un paramètre de contrôle au moyen d'un algorithme du gradient, un algorithme du simplexe, une méthode de Nelder-Mead, un algorithme évolutionnaire et/ou par COBYLA (Constrained optimization by linear approximation).

7. Procédé selon l'une des revendications précédentes, **caractérisé en ce que** le module de prédiction (26) et/ou le module d'adaptation (30) obtient en outre des paramètres de processus (Pᵤ) indépendants du temps et/ou des valeurs de consigne futures d'au moins un paramètre d'environnement (K₁-Kₙ) et/ou d'au moins un paramètre de contrôle, en particulier conformément au processus de traitement en cours ou adapté (Z_{A}) et les utilise pour une prédiction ou une adaptation ; et/ou
**en ce que** le module de prédiction (26) comprend pour une prédiction au moins un modèle d'apprentissage automatique, en particulier un réseau neuronal artificiel entraîné, un arbre de décision, au moins une forêt aléatoire et/ou une régression de processus gaussien, un modèle empirique de l'environnement de processus avec une dépendance temporelle, un modèle semi-physique tel qu'un modèle mathématique basé sur des relations physico-chimiques simplifiées, et/ou un modèle physique tel qu'une simulation FEM ; et/ou
**en ce que** le module de prédication (26) présente au moins un module d'environnement (36) pour la prédiction de valeurs futures d'au moins un paramètre d'environnement (K₁-Kₙ) et au moins un module de résultat de processus (38) pour la prédiction du résultat du processus de traitement en cours ou adapté (Z_{A}), le module de résultat de processus (38) obtenant la sortie du module d'environnement (36).

8. Procédé selon l'une des revendications précédentes, **caractérisé par** les étapes suivantes :
- le fournissement de valeurs passées dudit au moins un paramètre d'environnement (K₁-Kₙ) et/ou de valeurs passées dudit au moins un paramètre de produit (L₁-Lₙ),
- le fournissement de valeurs futures dudit au moins un paramètre d'environnement (K₁-Kₙ) et/ou d'au moins un paramètre de contrôle influençant ledit au moins un paramètre d'environnement (K₁-Kₙ),
- la transmission des valeurs passées et des valeurs futures au module de prédiction (26), et
- la détermination du résultat du processus de traitement en cours au moyen du module de prédiction (26) au moins sur la base des valeurs passées et des valeurs futures dudit au moins un paramètre d'environnement (K₁-Kₙ) et/ou d'au moins un paramètre de contrôle influençant ledit au moins un paramètre d'environnement (K₁-Kₙ), et dudit au moins un paramètre de produit (L₁-Lₙ).

9. Procédé selon l'une des revendications précédentes, **caractérisé en ce que** le module de commande de composant (32) commande les composants (20) dudit au moins un appareil de traitement (10) de telle sorte que le processus de traitement adapté (Z_{A}) est mis en oeuvre, et/ou
**en ce que** il est déterminé à intervalles réguliers, en particulier toutes les 30 secondes, si le résultat de prédiction (Ev) correspond suffisamment au résultat souhaité (E_{w}), les étapes en amont de la détermination étant en particulier également mis en oeuvre, c'est-à-dire au moins les étapes a) à e).

10. Unité de réglage pour un appareil de traitement (10) qui est un appareil de cuisson (12), l'unité de réglage (24, 28) étant aménagée de manière à mettre en oeuvre un procédé selon l'une des revendications précédentes.

11. Appareil de traitement (10), l'appareil de traitement (10) étant un appareil de cuisson (12), comprenant un espace de processus (14), l'espace de processus (14) étant un espace de cuisson, pour le traitement d'un produit conformément à un processus de traitement, plusieurs composants (20) qui influencent un environnement de processus dans l'espace de processus (14), et une unité de réglage (24, 28) pour le réglage de l'appareil de traitement (10) selon la revendication 10.

12. Programme informatique comprenant des moyens de codage de programme pour mettre en oeuvre les étapes d'un procédé selon l'une des revendications 1 à 9 lorsque le programme informatique est mis en oeuvre sur un ordinateur ou une unité de réglage (24, 28), en particulier sur une unité de réglage (24, 28) pour un appareil de traitement (10) selon la revendication 10.

13. Support de données lisible par ordinateur, sur lequel un programme informatique selon la revendication 12 est stocké.
